# EUROPEAN PATENT APPLICATION

(11) **EP 3 637 331 A1**
(43) Date of publication of application: **15.04.2020**
(21) Application number: 19202208.5
(22) Date of filing: 09.10.2019
(51) Int. Cl.: G06Q 10/00

(54) **VEHICLE INFORMATION MANAGEMENT SYSTEM AND MANAGEMENT METHOD**

(30) Priority: 10.10.2018 JP 2018191774
(71) Applicant: Hitachi, Ltd., Tokyo 100-8280 (JP)
(72) Inventor: Syafril, Bandara, Tokyo, 100-8280 (JP); Nagano, Takehiko, Tokyo, 100-8280 (JP); Mori, Takuro, Tokyo, 100-8280 (JP)
(74) Representative: Manitz Finsterwald Patent- und Rechtsanwaltspartnerschaft mbB

(57) **Abstract**

Disclosed is a vehicle information management system 1 for choosing a second vehicle 3B corresponding to a first vehicle 3A by selecting a vehicle having a functional configuration corresponding to that of the first vehicle as a candidate of the second vehicle, and selecting, as the second vehicle, a vehicle having a use environment corresponding to that of the first vehicle from the selected candidates of the second vehicles.

## Description

### BACKGROUND

The present invention relates to a vehicle information management system and a vehicle information management method.

Japanese Patent Application Publication No. 2017-117193 discloses a technique of specifying a cause of failure such as a malfunction of a vehicle. In the technique of Japanese Patent Application Publication No. 2017-117193, information on an event where failure occurs is associated with event type data, manufacturing data, regional data, component data, travel distance data, and maintenance data. In the technique of Patent Document 1, the cause of failure is specified by analyzing a tendency of information accumulated for the same event type on the basis of an element selected from the respective elements for each manufacturing data, each regional data, each component data, each travel distance data, and each maintenance data.

### SUMMARY

However, in the technique of Japanese Patent Application Publication No. 2017-117193, only information regarding the failures that have occurred in the past is utilized, and information that can be used for analyzing the cause of failure that have not occurred in the past or the cause of failure occurring due to complex reasons is not sufficient. For example, since there is no case for a failure resulting from software developed newly, it is difficult to specify the cause of failure using the technique of Patent Document 1.

The present invention has been made in view of the above-described problems, and an object thereof is to provide a vehicle information management system and a vehicle information management method, capable of appropriately choosing a second vehicle corresponding to a first vehicle. Another object of the present invention is to provide a vehicle information management system and a vehicle information management method, capable of supporting analysis of first information regarding a first vehicle by collecting second information corresponding to the first information from the second vehicle.

In order to solve the above-described problems, a vehicle information management system according to an aspect of the present invention is a vehicle information management system configured to choose a second vehicle corresponding to a first vehicle, the vehicle information management system being configured to select a vehicle having a functional configuration corresponding to that of the first vehicle as a candidate of the second vehicle and select, as the second vehicle, a vehicle having a use environment corresponding to that of the first vehicle out of the selected candidates of the second vehicle.

According to the present invention, it is possible to choose a second vehicle corresponding to a first vehicle on the basis of a functional configuration and a use environment of the first vehicle.

### BRIEF DESCRIPTION OF THE DRAWINGS

FIG. 1 is an explanatory diagram illustrating a general outline of the present embodiment;
FIG. 2 is an explanatory diagram illustrating a general configuration including a vehicle information management system;
FIG. 3 is a flowchart illustrating the entire process;
FIG. 4 is a flowchart illustrating a cooperating vehicle choosing process;
FIG. 5 is a flowchart illustrating a log mode setting process;
FIGS. 6(1) to 6(3) are explanatory diagrams illustrating a log mode setting screen;
FIG. 7 is an explanatory diagram illustrating an example of a database;
FIG. 8 is an explanatory diagram illustrating another example of the database;
FIG. 9 is an explanatory diagram obtained by visualizing a configuration of a vehicle;
FIG. 10 is a flowchart illustrating a process of interrupting collection of log data;
FIG. 11 is a flowchart illustrating a modification of a cooperating vehicle choosing process;
FIG. 12 is a flowchart illustrating a failure report process according to a third embodiment; and
FIG. 13 is an explanatory diagram illustrating a car navigation screen by which a failure can be reported.

### DETAILED DESCRIPTION OF THE EMBODIMENT

Hereinafter, embodiments of the present invention will be described with reference to the accompanying drawings. As described below, a vehicle information management system according to the present embodiment searches a second vehicle (cooperating vehicle) that is likely to travel under an identical or similar environment as that of the first vehicle (failed vehicle) (including an internal environment such as hardware or software and an external environment such as weather, a road slope, a radius of curvature, or a driving habit) . According to the present embodiment, in order to detect the second vehicle, an application program for collecting information (hereinafter, abbreviated as "application" or "app" in some cases) is distributed to the second vehicle.

As a result, according to the present embodiment, second information corresponding to first information regarding an event occurring in the first vehicle can be collected from the second vehicle. When the first information contains information regarding a failure occurring in the first vehicle, the second information may contain information regarding a cause of failure.

According to the present embodiment, it is possible to collect information (second information) that is necessary for investigating a failure cause of the vehicle and is necessary for investigating the failure cause from another vehicle (second vehicle) having a functionality or a use environment similar to that of the failed vehicle (first vehicle). Therefore, according to the present embodiment, it is possible to effectively collect information that can be used to investigate the failure cause, effectively analyze the failure cause, and reduce the time necessary for the analysis.

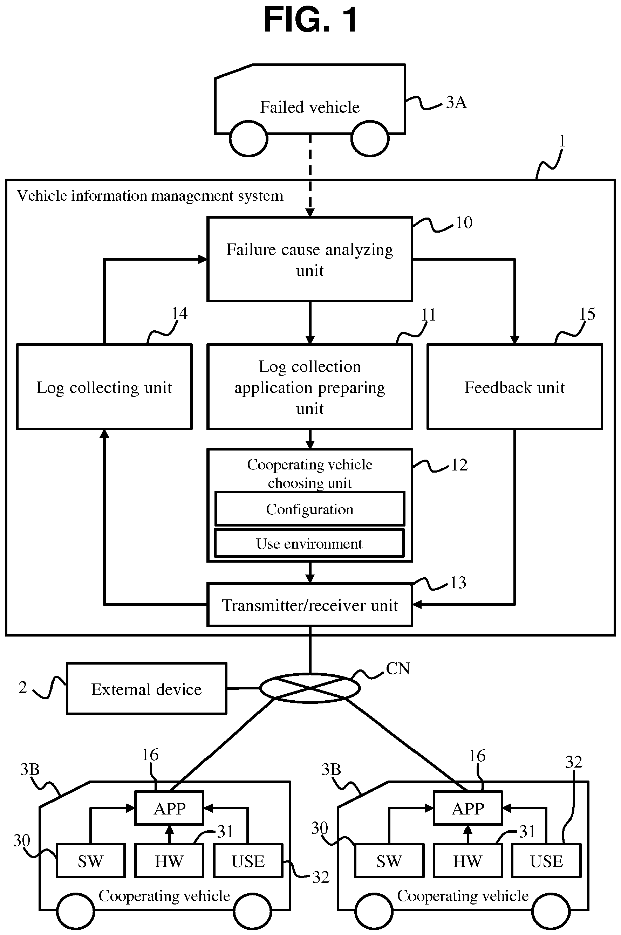

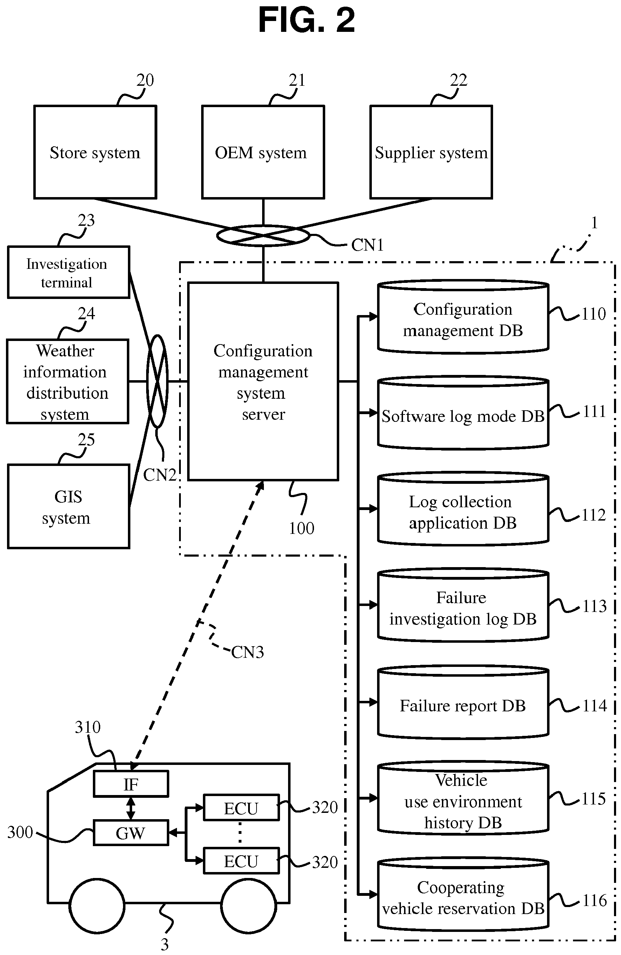

As described below in conjunction with FIGS. 1 and 2, a system according to the present embodiment includes means 16 that collects an additional log to specify a cause of failure occurring in the vehicle 3, a vendor system 20 of the vehicle 3, an OEM system 21, a supplier system 22, a computer terminal 23 for investigating a failure cause, an OTA (Over the Air) center, and the vehicle 3.

The OTA center is a data center that performs radio communication with the vehicle 3, and includes, for example, a configuration management server 100 for a vehicle, a configuration management database 110, a software log mode database 111, a log collection application database 112, a failure investigation log database 113, a failure report database 114, and a vehicle use environment history database 115.

The vehicle 3 includes a gateway 300, a communication module 310, and each ECU (Electronic Control Unit) 320. The ECU 320 includes, for example, an automatic driving ECU, a power train system ECU, a chassis system ECU, and a sensor ECU. These ECUs, the gateway 300, and the communication module 310 are coupled to each other via an in-vehicle network CAN (Controller Area Network) .

The vehicle information management system according to the present embodiment includes, for example, the configuration management system server 100, the configuration management database 110, the software log mode database 111, the log collection application database 112, the failure investigation log database 113, the failure report database 114, the vehicle use environment history database 115, and a cooperating vehicle reservation database 116.

The vehicle information management system 1 is communicatably coupled to a server 20 of the vendor computer system managed by the vendor, a server 21 of the computer system managed by the OEM, a server 22 of the computer system managed by the supplier, an investigation terminal 23 used by an investigator who investigates a failure cause, and a plurality of vehicles 3 (3a and 3b).

The server 20 of the vendor computer system may also include means that records a report of failure occurrence and means that records log information collected for failure investigation in the system 20 (none of which is illustrated). The server 21 of the computer system managed by the OEM may also include means that provides design information and manufacturing information of the vehicle to the configuration management system server 100. The server 22 of the computer system managed by the supplier may also include means (not shown) used for the supplier to provide design information and manufacturing information regarding vehicle components to the configuration management system server 100.

The investigator can input an identifier of the ECU and an identifier of the software having a failure to the configuration management system server 100 by using the investigation terminal 23. The configuration management system server 100 may also include means that narrows down vehicles having a similar configuration with reference to the configuration management database 110 and outputs the narrow-down result to the investigation terminal 23.

The investigator may use the investigation terminal 23 to access the configuration management system server 100 and set the operation log of the information collection target software via a screen interface provided by the configuration management system server 100. The configuration management system server 100 may also include means that creates a software package which is to be distributed to the cooperating vehicle 3B for the software for collecting the operation log with reference to the log collection application database 112.

The configuration management system server 100 may also include means that distributes the software package for collecting information to the cooperating vehicle 3B via a mobile network.

### Embodiment 1

A first embodiment will be described with reference to FIGS. 1 to 11. The vehicle information management system 1 according to the present embodiment manages information regarding hardware and software of the vehicle created in the design and manufacturing stage of the vehicle and a use environment where the vehicle is used after being sold. When a failure occurs in a certain vehicle 3A, the vehicle information management system 1 collects information regarding an operation log of the vehicle or a use environment history from a vehicle 3B having a similar functional configuration or a similar use environment on the basis of such information.

FIG. 1 is a general configuration diagram illustrating the vehicle information management system 1. The vehicle information management system 1 is coupled to other computer systems 20, 21, and 22 described below in conjunction with FIG. 2, the investigation terminal 23, and information providing devices 24 and 25 via a communication network CN. Such external computers 21 to 25 are collectively called "external device 2".

The vehicle information management system 1 is also communicatably coupled to the vehicles 3A and 3B. The vehicle 3A as a "first vehicle" is a failed vehicle. The cooperating vehicle 3B as a "second vehicle" is a vehicle that provides information for analyzing a cause of failure to the vehicle information management system 1. The vehicle 3A is referred to as a failed vehicle 3A, and the vehicle 3B is referred to as a cooperating vehicle 3B. When it is not necessary to distinguish between the vehicles 3A and 3B, they are referred to as a "vehicle 3". While vehicles such as a passenger car, a bus, or a truck will be described by way of example in the present embodiment, the present embodiment is also applicable to other types of vehicles or a mobile entity other than the vehicle.

The vehicle information management system 1 is configured using a computer system having a microprocessor, a main storage device, a subsidiary storage device, a communication interface circuit, and the like. The vehicle information management system 1 has, for example, a function 10 of analyzing the failure cause, a function 11 of preparing an information collection application 16 for collecting log data from the cooperating vehicle 3B, a function 12 of choosing the cooperating vehicle 3B, a function 13 of communicating with the vehicle 3 and the external device 2, a function 14 of collecting log data, and a function 15 of feeding back information to the cooperating vehicle 3B. The log data collected from the cooperating vehicle 3B corresponds to the "second information". Information regarding the failure obtained from the failed vehicle 3A corresponds to the "first information".

An example of collecting information from the cooperating vehicle 3B will be described. The cooperating vehicle 3B has, for example, a software configuration 30, a hardware configuration 31, and a use environment history 32. The log collection application 16 collects any one or a plurality of the software configuration 30, the hardware configuration 31, and the use environment history 32 depending on the set log mode, and transmits it to the vehicle information management system 1. Note that the failed vehicle 3A also has a configuration similar to that of the cooperating vehicle 3B. An identical vehicle 3 sometimes becomes a failed vehicle 3A and it sometimes becomes the cooperating vehicle 3B. The use environment history 32 may include, for example, a travel state (such as a slope, a curvature, an acceleration, a deceleration, the number of braking, and a steering angle), a weather state during the travel, or the like.

FIG. 2 illustrates a configuration of the entire system including the vehicle information management system 1. As described in conjunction with FIG. 1, the vehicle information management system 1 is communicatably coupled to each computer 20 to 25 as the external device 2. In addition, the vehicle information management system 1 is also communicatably coupled to the vehicle 3.

The vehicle information management system 1 is coupled to the vendor system 20, the OEM system 21, and the supplier system 22, for example, via a communication network CN1. In addition, the vehicle information management system 1 is coupled to the investigation terminal 23, the weather information distribution system 24, and the GIS (Geographic Information System) system 25, for example, via a communication network CN2. In addition, the vehicle information management system 1 is coupled to each vehicle 3, for example, via a communication network CN3. Although a single vehicle 3 is illustrated in FIG. 2, the vehicle information management system 1 is coupled to a plurality of vehicles 3 in practice. It is not necessary to distinguish the communication networks CN1 to CN3, and for example, the communication networks CN1 and CN2 may be commonalized. The communication network CN3 may be configured as a wireless communication network.

A control configuration of the vehicle 3 will be described. The vehicle 3 includes, for example, a gateway 300, a communication module 310, and a plurality of ECUs 320. The ECU 320 is provided for each function such as an engine, a steering, and an accelerator. Each ECU 320 communicates with the vehicle information management system 1 via the gateway 300 and the communication module 310.

The vehicle information management system 1 has, for example, a configuration management system server 100 and each database 110 to 116. Each database 110 to 116 will be described below in details . Note that, in the drawings, the database is abbreviated as "DB".

The configuration management system server 100 collectively manages hardware and software of the vehicle 3 recorded in the configuration management database 110. The configuration management system server 100 performs management by using, for example, an identifier for identifying the vehicle 3, an identifier for identifying the ECU 320, and an identifier for identifying the software operated using the ECU 320. The configuration management system server 100 obtains the configurations or use environments of each vehicle by recording such information and relationships thereof in the database.

The vendor system 20 may manage sales information of the vehicle 3 and obtain information necessary for maintenance of the vehicle 3 from the configuration management system server 100. The vendor system 20 transmits a failure of the vehicle 3A reported to the vendor to the configuration management system server 100 and records it on the failure report database 114. The vendor system 20 includes a server managed by the vendor and a terminal operated by a staff of the vendor (none of which is illustrated).

The OEM system 21 provides design information and manufacturing information of the vehicle 3 to the configuration management system server 100. On the basis of this information, the configuration management system server 100 creates configuration information of each vehicle 3 and records it on the configuration management database 110. The OEM system 21 transmits the failure reported to the OEM to the configuration management system server 100 and records it on the failure report database 114. The OEM system 21 includes a server managed by the OEM and a terminal operated by a staff of the OEM (none of which is illustrated).

The supplier system 22 provides the design information and the manufacturing information of the components of the vehicle 3 to the configuration management system server 100. The supplier system 22 creates component information of the vehicle 3 in addition to the vehicle information provided by the OEM, and records the created component information on the configuration management database 110. The supplier system 22 includes a server managed by the supplier and a terminal operated by a staff of the supplier (none of which is illustrated).

An investigator who specifies a cause of failure occurring in the vehicle 3A (see FIG. 1) investigates the cause of failure of the vehicle 3A using the investigation terminal 23. The investigator is coupled to the configuration management system server 100 using the investigation terminal 23 with a determined authority. The investigator requests the configuration management system server 100 for the log information necessary for specifying the failure cause. Upon receiving this request, the configuration management system server 100 obtains the log information from the failure investigation log database 113 and transmits it to the investigation terminal 23.

If the investigator determines that log data for a specific software program is necessary in order to investigate the cause of failure, the log mode of the software recorded on the software log mode database 111 is changed using an interface provided by the configuration management system server 100.

When an additional log is collected from the cooperating vehicle 3B similar to the failed vehicle 3A, the investigator selects the log collection application 16 which is to be distributed to the target vehicle 3B using the interface provided by the configuration management system server 100. The configuration management system server 100 communicates with each vehicle 3B via a mobile network CN3.

When an additional log is collected from the cooperating vehicle 3B in order to investigate a cause of failure, the configuration management system server 100 creates a package of the log collection application 16 selected by the investigator and distributes the created package to the distribution target cooperating vehicle 3B. The distribution target vehicle 3B downloads the package from the configuration management system server 100. The cooperating vehicle 3B installs the log collection application 16 included in the downloaded package in the target ECU 320 under permission of a driver. The cooperating vehicle 3B may install the log collection application 16 in the gateway 300 and collect the log data of the target ECU from the gateway.

The application 16 installed in the cooperating vehicle 3B collects an operation log of the investigation target software and transmits the collected operation log to the configuration management system server 100. The configuration management system server 100 updates the failure investigation log database 113.

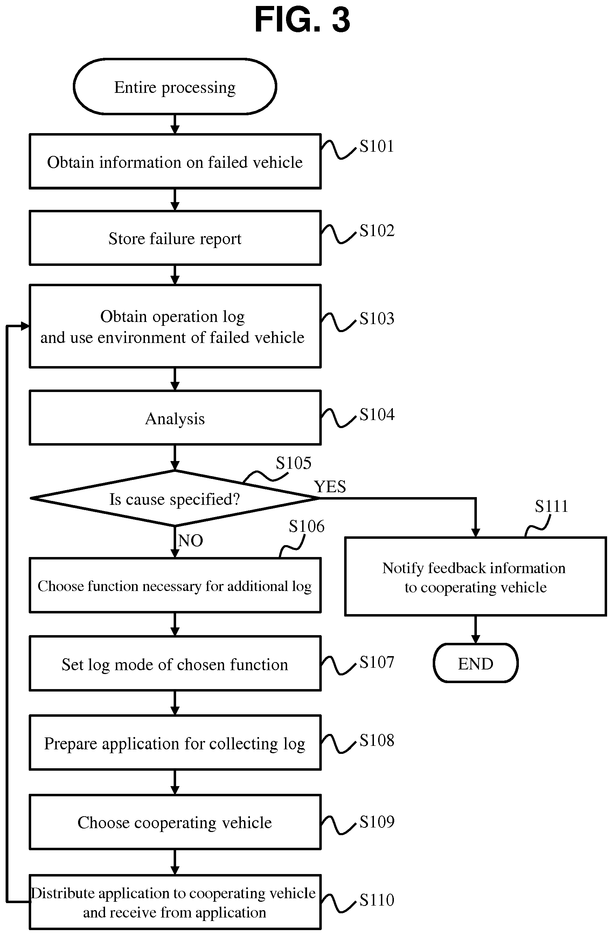

FIG. 3 is a flowchart illustrating a process of investigating a failure cause by collecting information from the cooperating vehicle 3B having a configuration and a use environment similar to those of the failed vehicle 3A.

The vehicle information management system 1 obtains information on the failed vehicle 3A (S101) . The failure occurring in the vehicle includes a failure caused by an internal configuration of the vehicle and a failure caused by an external environment of the vehicle. The present embodiment is applicable to each of the failures. A method of detecting the failure is not particularly limited. The failure detection method includes either a case where the driver feels a failure during driving the vehicle 3A or a case where the investigator detects an abnormality during inspection of the vehicle in the vendor. When the driver detects a failure, the vehicle 3A is brought into the vendor, and the failure is registered in the configuration management system server 100 from the vendor system 20.

The configuration management system server 100 stores the reported failure in the failure report database 114 (S102). For example, a person-in-charge of the vendor transmits the failure information reported from the driver to the configuration management system server 100 by using the vendor terminal coupled to the vendor system 20. The configuration management system server 100 records the information regarding the failure report received from the vendor system 20 on the failure report database 114. The information regarding the failure report may be transmitted from the OEM system 21 or the supplier system 22 to the configuration management system server 100 and may be stored in the failure report database 114.

The configuration management system server 100 obtains the operation log information and the use environment history information of the failed vehicle 3A (S103). The operation log information includes, for example, the operation history of the driver and the log of the application operated by each ECU 320 of the vehicle 3A. The use environment history information includes, for example, a route history along which the vehicle travels and a shot history of the in-vehicle camera.

The failure cause analyzing unit 10 of the configuration management system server 100 specifies the cause of the failure occurring in the vehicle 3A by analyzing the information obtained in step S103 (S104). In the present embodiment, the method of specifying the cause of failure is not limited. The failure cause analyzing unit 10 may investigate an operation that generates a failure, for example, by analyzing the operation history of the driver. The failure cause analyzing unit 10 may investigate a warning code and an error code by analyzing the application log operated by the ECU 320. The failure cause analyzing unit 10 may investigate a travel situation burdened to the vehicle 3A by analyzing a road situation where the vehicle 3A travels on the basis of the travel route of the vehicle 3A.

The configuration management system server 100 determines whether or not the failure cause can be specified on the basis of the information obtained from the failed vehicle 3A (S105) . If the cause is specified (S105: YES), the configuration management system server 100 notifies the feedback information to the cooperating vehicle 3B (S111) and terminates this process. If the cooperating vehicle 3B is not chosen, step S111 is skipped.

Here, in general, if the cause of failure is simple, the cause is found in a test stage prior to the sale, and the countermeasure is applied. Many of the failures occurring after the sale of the vehicle are due to multiple causes including a plurality of causes or a cause of the external environment. Therefore, the failure occurrence situation may be verified by driving the same vehicle as the failure vehicle 3A in the same way. However, if the travel is tested by preparing a plurality of the same type vehicles as the failed vehicle 3A, the test cost increases, and the time is taken.

In this regard, according to the present embodiment, if it is difficult to specify the cause only using the information on the failed vehicle 3A (S105: NO), the configuration management system server 100 detects a vehicle 3B having an internal function similar to that of the vehicle 3A and/or a vehicle 3B having a use environment similar to that of the vehicle 3A as the cooperating vehicle 3B, and obtains the additional information from the cooperating vehicles 3B.

The log collection application preparing unit 11 of the configuration management system server 100 chooses a function of the vehicle 3B necessitating an additional log (S106). The log collection application preparing unit 11 narrows down the candidates of the failed functions by removing the normally operating function from the functions of the vehicle 3A on the basis of the analysis result of step S104.

The failure cause analyzing unit 10 of the configuration management system server 100 references the configuration management database 110 on the basis of the function of the vehicle 3A narrowed down in step S106 and estimated to have a failure. As a result, the failure cause analyzing unit 10 specifies the ECU and the software relating to each function selected as a candidate of the failure cause, extracts the log mode of the specified software from the software log mode database 111, and displays it on the investigation terminal 23 (S107).

The log collection application preparing unit 11 sets the log mode necessary for specifying the cause of failure (S107). For example, the software SX operating in the ECU-A estimated to have a failure is set to a log mode of "error level" in a normal case. When the failure cause is investigated, the mode is changed to a log mode of "information level" in order to allow the software SX to output a specific log.

The log collection application preparing unit 11 of the configuration management system server 100 extracts the application 16 for collecting the operation log of the software from the log collection application database 112 on the basis of the software identifier for which the log mode is set in step S107 (S108) . In addition, the log collection application preparing unit 11 prepares a package for distributing the information collection application 16 extracted from the database 112 to the cooperating vehicle 3B (S108) . For example, when the application 16 that collects the log of the software SX is "Logger-B", the log collection application preparing unit 11 creates the package for distributing the application using the OTA.

The cooperating vehicle choosing unit 12 of the configuration management system server 100 chooses the cooperating vehicle from a group of vehicles managed by the configuration management system server 100 on the basis of the function chosen in step S106 (S109) .

The log collection application preparing unit 11 distributes the package of the information collection application 16 for collecting the log mode information of the software set in step S107 and the operation log of the software created in step S108 to the cooperating vehicle 3B specified in step S109 via the mobile network CN3 (S110).

The cooperating vehicle 3B that receives the package from the configuration management system server 100 obtains permission of the driver and then changes the operation log mode of the target software into the designated log mode and installs the application 16 for collecting the operation log.

The application 16 installed in the cooperating vehicle 3B collects the operation log of the target software and transmits it to the configuration management system server 100 via the mobile network CN3.

Upon receiving the operation log of the cooperating vehicle 3B, the configuration management system server 100 records it on the failure investigation log database 113 (S110). The configuration management system server 100 extracts information necessary for the investigation from the failure investigation log database 113, and the process returns to step S103.

If the cause of failure can be specified in step S104, the configuration management system server 100 notifies the failure investigation result as a feedback information to the cooperating vehicle 3B that has provided the information for analyzing the failure cause (S111). If there is a possibility that a similar failure occurs in the cooperating vehicle 3B, the feedback information of the configuration management system server 100 may contain a method of preventing the failure or a countermeasure.

The entire process of FIG. 3 may be executed by the configuration management system server 100, or a part of steps may be processed by the investigator. For example, in step S104, the failure cause may be automatically analyzed using a computer program, or the investigator may manually analyze the failure cause using an analysis support program.

All of the steps S106 to S108 for preparing the application 16 for collecting the log from the cooperating vehicle 3B may be automatically executed using a computer program, or at least a part of the steps may be manually executed by the investigator.

The feedback information may be transmitted to all of the cooperating vehicles 3B, or may be transmitted only to a part of the cooperating vehicles 3B that permit receiving of the feedback information.

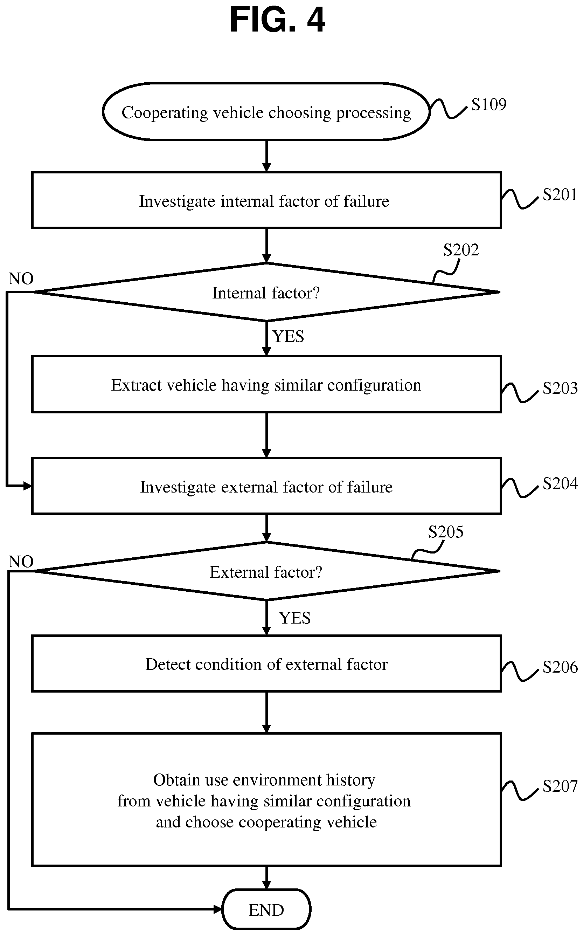

FIG. 4 is a flowchart illustrating details of step S109 for choosing the cooperating vehicle 3B as described in conjunction with FIG. 3.

The cooperating vehicle choosing unit 12 investigates whether or not the failure occurrence is caused by an internal function of the vehicle 3A on the basis of the operation log of the internal function of the vehicle collected from the failed vehicle 3A (S201) . If the investigation of step S104 of FIG. 3 for determining whether or not the failure is caused by the internal function of the vehicle has been finished, it is possible to use the investigation result of the step S104.

The cooperating vehicle choosing unit 12 determines whether or not the failure has occurred due to an internal factor of the vehicle 3A on the basis of the investigation result of step S201 (S202). If the cooperating vehicle choosing unit 12 determines that there is a possibility that the failure has occurred due to an internal factor of the vehicle (S202: YES), the process advances to step S203 described below. If it is determined that there is no possibility that the failure has occurred due to an internal factor (S202: NO), the process advances to step S204 described below.

The cooperating vehicle choosing unit 12 narrows down the internal functions estimated to have a failure from the internal functions of the failed vehicle 3A on the basis of the investigation result of step S201 (S203). In addition, the cooperating vehicle choosing unit 12 extracts a vehicle 3B having an identical or similar vehicle configuration as that of the vehicle for implementing the narrowed internal functions by using the configuration management database 110 on the basis of the narrowed internal functions (S203) .

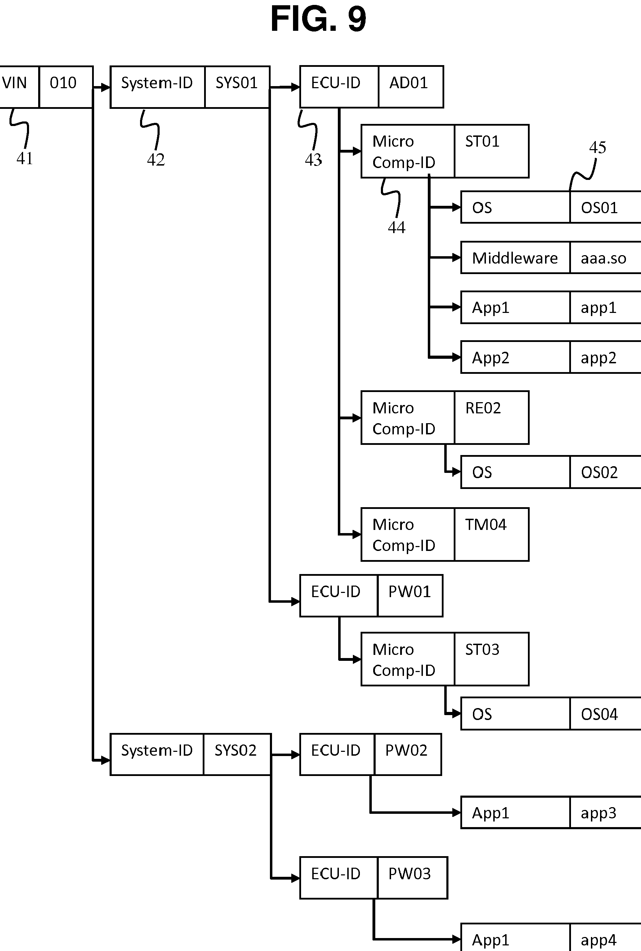

As illustrated in FIG. 9, it is possible to narrow down the vehicles 3B having a configuration similar to that of the failed vehicle 3A by managing the configurations of each vehicle. For example, as indicated by the reference numeral 42 in FIG. 9, if the portion estimated to have a failure is "SYS01", it is possible to narrow down the vehicle identification number "VIN010" having the function "SYS01" in the vehicle configuration management system (refer to reference numeral 41). In addition, if an ECU 320 having a failure can be specified, it is possible to specify the vehicle 3B having a configuration similar to that of the failed vehicle 3A on the basis of "ECU-ID" indicated by reference numeral 43.

In step S204, the cooperating vehicle choosing unit 12 investigates whether or not the failure has occurred due to an external factor of the vehicle 3A on the basis of the vehicle use environment history information collected from the failed vehicle 3A (S204). If the investigation regarding whether or not the failure occurs due to an external factor has been finished in step S104 of FIG. 3, the cooperating vehicle choosing unit 12 may use the investigation result thereof.

The cooperating vehicle choosing unit 12 determines whether or not the failure occurring in the vehicle 3A is caused by an external factor, that is, whether or not the failure occurs due to an external factor, on the basis of the investigation result of step S204 (S205). If there is a possibility that the failure occurs due to an external factor (S205: YES), the process advances to step S206. If there is no possibility that the failure occurs due to an external factor (S205: NO), the choosing process of the cooperating vehicle 3B is terminated.

In step S206, the cooperating vehicle choosing unit 12 collects an environmental condition that may affect failure occurrence on the basis of the use environment history information of the vehicle 3A. For example, the environmental condition may include a condition that "there are many uphill roads" in the case of a road situation, a condition of "thunderstorm" in the case of weather, a condition of "traffic jam of 30 minutes or longer" in the case of a congestion situation.

The cooperating vehicle choosing unit 12 obtains the use environment history information from the cooperating vehicle 3B narrowed in step S203, and chooses the cooperating vehicle 3B by collating the obtained use environment history information and the environmental conditions (S206) affecting the failure occurrence (S207).

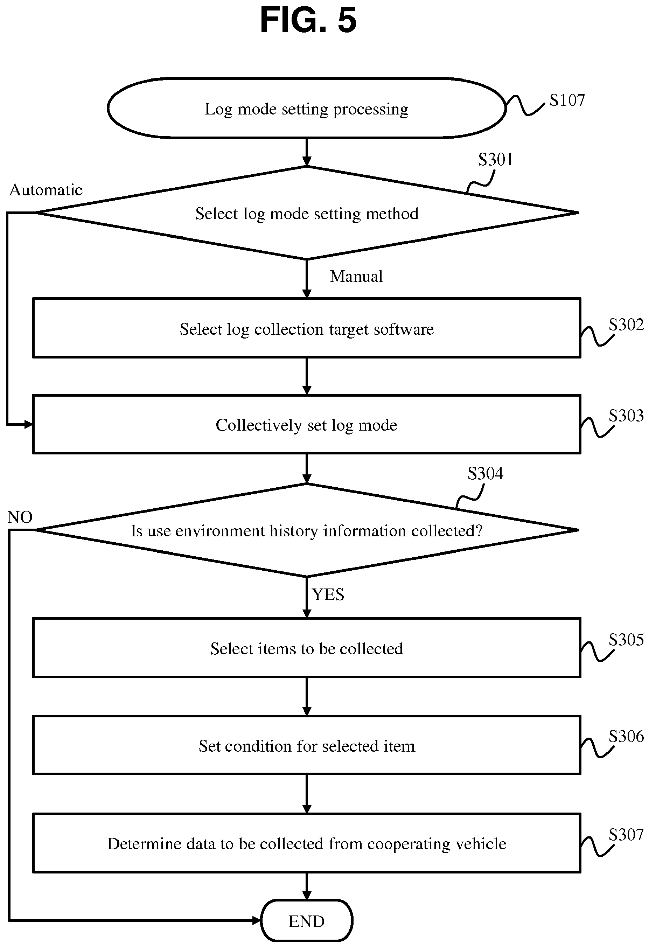

FIG. 5 is a flowchart illustrating details of the log mode setting process (S107) of FIG. 3.

The configuration management system server 100 selects a log mode setting method for the software that executes the function chosen in step S106 of FIG. 3 (the function necessitating an additional log) (S301). The log mode setting method includes two different modes, that is, an automatic method and a manual method. When the log mode is automatically set, the log mode is set collectively for all of the software programs chosen in step S106. When the log mode is manually set, the investigator manually sets the log mode using the investigation terminal 23 for each of the software programs chosen in step S106. If "automatic" is selected in step S301, the process advances to step S303. If "manual" is selected in step S301, the process advances to step S302. The log mode setting method may be selected by the investigator or may be automatically selected by the configuration management system server 100.

The following steps may be executed manually by the investigator or automatically by the configuration management system server 100.

The configuration management system server 100 selects software as a log collection target (S302) . If "manual" is selected in step S301, the software to be set as the log mode is individually selected from the software programs chosen in step S106. By performing this step S302, it is possible to set different log mode levels for the software programs that collect the additional logs.

If "automatic" is selected in step S301, the configuration management system server 100 collectively sets the log modes for all of the target software programs (S303) . If "manual" is selected in step S301, the log mode is individually set for the software program selected in step S302. The log mode types may include, for example, "information level" at which all of the log contents are output, "warning level" at which a warning and an error are output, and "error level" at which only the error is output. Other log modes may also be included.

The configuration management system server 100 determines whether or not the use environment history information is collected from the cooperating vehicle 3B in order to investigate the cause of failure (S304). If the use environment history information is collected from the cooperating vehicle 3B (S304: YES), the process advances to step S305. If the use environment history information is not collected from the cooperating vehicle 3B (S304: NO), this process is terminated.

The configuration management system server 100 selects items of the use environment history information to be collected for the cooperating vehicle 3B (S305). The selectable use environment history information may include, for example, a slope of the road where the cooperating vehicle 3B travels, a congestion situation of the road where the cooperating vehicle 3B travels, weather of a region where the cooperating vehicle 3B travels, or the like.

The configuration management system server 100 sets a condition for collecting the use environment history information for the items selected in step S305 (S306). The selectable conditions may include, for example, "the road slope is collected in the case of an uphill having an angle of 20° or higher", "the road congestion situation is collected in the case of a traffic jam of 10 km or longer" under a road congestion situation, "the weather state such as sunny, cloudy, rainy, snowy, and thunderstorm is collected", or the like.

The configuration management system server 100 determines data to be collected in practice from the cooperating vehicle 3B on the basis of the collection condition of the use environment history information set in step S306 (S307) . For example, if the collection condition is set as "the use environment history information is collected only when weather is rainy", collection of the location information and the information of the in-vehicle camera that can show such a situation is determined. It is possible to investigate whether or not the weather was rainy, the amount of rain, and the visibility from the image captured by the camera mounted on the cooperating vehicle 3B.

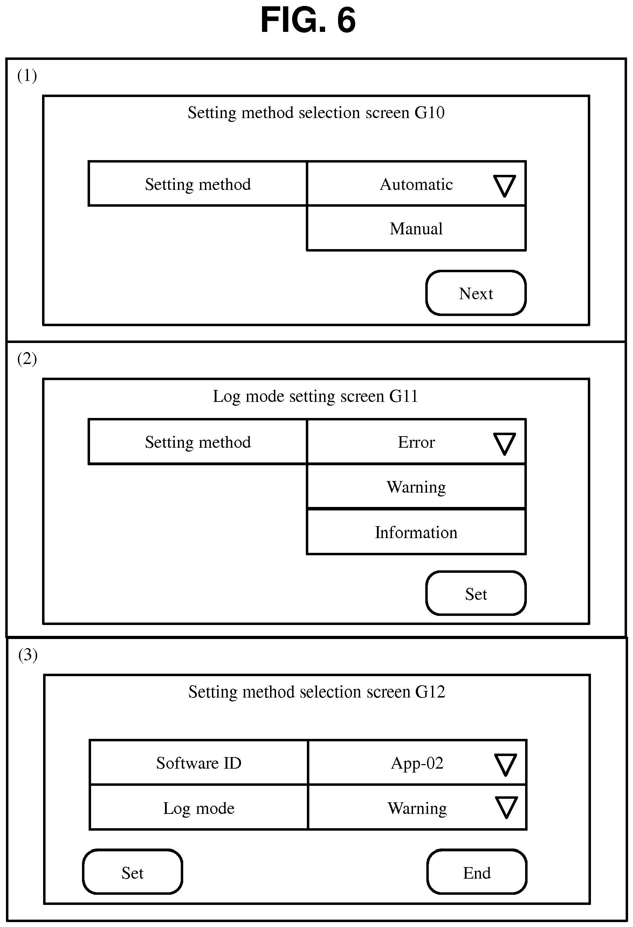

FIG. 6 illustrates an example of a user interface screen that can be used in the process of FIG. 5 (an example of the log mode setting screen) . The screen of FIG. 6 is used when the investigator sets the log mode.

The setting method selection screen G10 of FIG. 6(1) is used in step S301 of FIG. 5. If "automatic" is selected in step S301, a log mode setting screen G11 illustrated in FIG. 6(2) is used in step S303. Meanwhile, if "manual" is selected in step S301, the setting method selection screen G12 of FIG. 6(3) is used in steps S302 and S303.

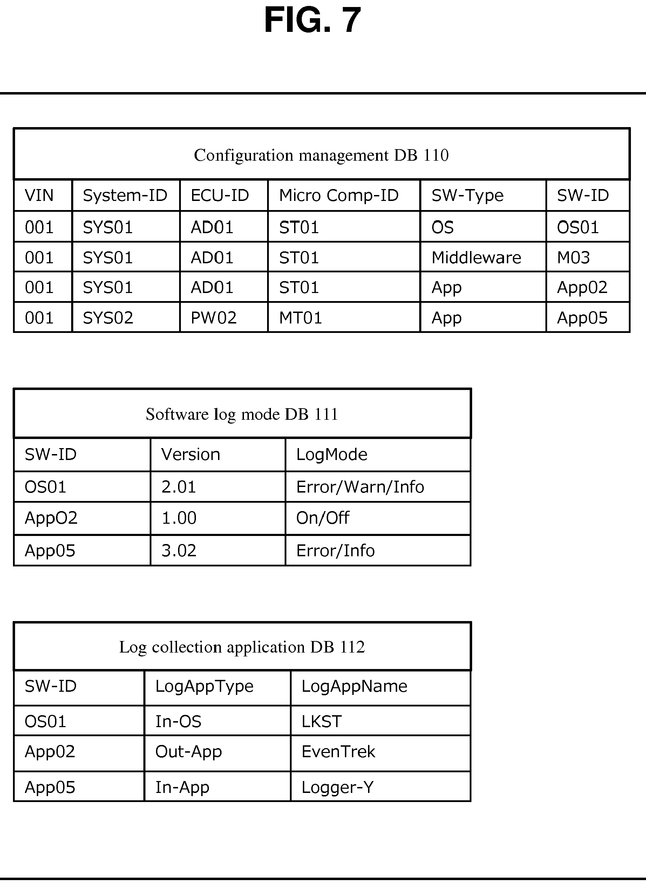

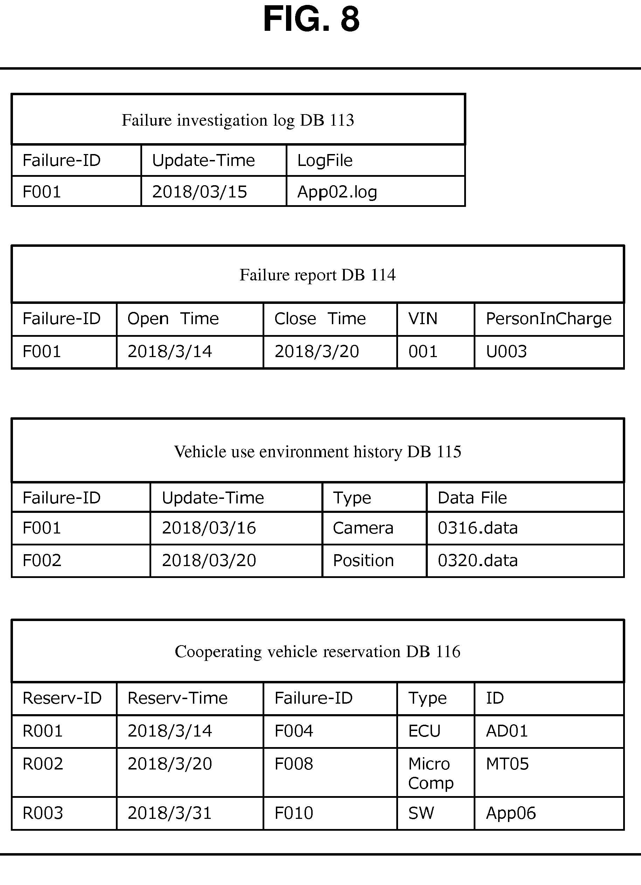

FIGS. 7 and 8 illustrate examples of the contents of the databases 110 to 116 used by the vehicle information management system 1.

An example of the configuration management database 110 is illustrated in an upper side of FIG. 7. The configuration management database 110 contains a plurality of data tables such as "VIN", "System-ID", "ECU-ID", "Micro Comp-ID", "SW-Type", and "SW-ID". However, the number of the data tables and the contents are not limited to those illustrated.

"VIN" refers to a vehicle identification number. "System-ID" refers to an identifier for specifying an internal function of the vehicle. The internal function of the vehicle includes, for example, an automatic driving (AD) system, a power train system, a chassis system, and a sensor system. "ECU-ID" refers to an identifier of the ECU used in each internal function. "Micro Comp-ID" refers to an identifier of the microcomputer in the ECU. "SW-Type" refers to a software type operating in each ECU. The software operating in the ECU may include, for example, an operating system, middleware, or an application. "SW-ID" refers to an identifier of the software operating in the ECU.

An example of the software log mode database 111 for managing the log mode of the software operating in each ECU is illustrated in the center of FIG. 7. The software log mode database 111 contains data tables such as "SW-ID", "Version", and "LogMode". The software log mode database 111 manages identifiers, versions, and current log modes of each software program.

An example of the database 112 that manages the application 16 for collecting the software operation log is illustrated in the lower side of FIG. 7. The log collection application database 112 contains data tables such as "SW-ID", "LogApp Type", and "LogAppName". The log collection application database 112 manages identifiers, log application types, and log application names of each software program. The log application type may include, for example, a type in which the log is provided by the operating system, a type in which the log is provided by the target software, and a type in which the log is provided by another application.

An example of the log database 113 used in investigation for specifying the failure cause is illustrated in an upper side of FIG. 8. The failure investigation log database 113 contains data tables such as "Failure-ID", "Update-Time", and "LogFile".

The log referred to herein includes both the operation log of the failed vehicle 3A and the log collected from the cooperating vehicle 3B. The failure information is identified by "Failure-ID", and each "Failure-ID" is associated with "LogFile".

The failure report database 114 is illustrated in the second table from the top in FIG. 8. In this database 114, an identifier "Failure-ID" is allocated to each failure report. In this database 114, a failure reporting date is stored in "Open Time", a date at which the failure cause is specified is stored in "Close Time", and an identifier of the person in charge who reports the failure is stored in "PersonInCharge".

An example of the database 115 for storing the vehicle use environment history information is illustrated in the third table from the top in FIG. 8. In this database 115, an identifier of the failure for which the data is used is stored in "Failure-ID", and the data type of the use environment history information is stored in "Type". The data type includes, for example, location information of the vehicle, image data captured by the in-vehicle camera, or the like. In this database 115, a storage place of the use environment history information is stored in "Data File".

An example of the database 116 that stores reservation information of the cooperating vehicle 3B is illustrated in the lower side of FIG. 8. In the database 116, an identifier reserved for the cooperating vehicle 3B is stored in "Reserv-ID", and the date reserved for the cooperating vehicle 3B is stored in "Reserv-Time". Furthermore, in the database 116, an identifier of the failure relating to the reservation of the cooperating vehicle 3B is stored in "Failure-ID", and the type of the component reserved for the cooperating vehicle 3B is stored in "Type". In addition, the identifier of the component reserved for the cooperating vehicle 3B is stored in "ID".

FIG. 9 illustrates a process of visualizing vehicle configuration management by using the information managed by the configuration management system server 100.

The vehicle is managed using the identifier "VIN" indicated by reference numeral 41. The vehicle has a plurality of internal functions identified by "System-ID" indicated by reference numeral 42. Each internal function has a plurality of ECUs identified by "ECU-ID" indicated by reference numeral 43. Each ECU has one or more microcomputers identified by "Micro Comp-ID" of reference numeral 44. If there are a plurality of microcomputers, they are identified by "Micro Comp-ID". If there is only a single microcomputer, it may be identified by "ECU-ID". In each microcomputer, one or more software programs are operated as indicated by reference numeral 45. Each software program is identified by the type and the software ID. The type may include, for example, "OS" or "Middleware", and the software ID may include, for example, "OS01" and "aaa.so".

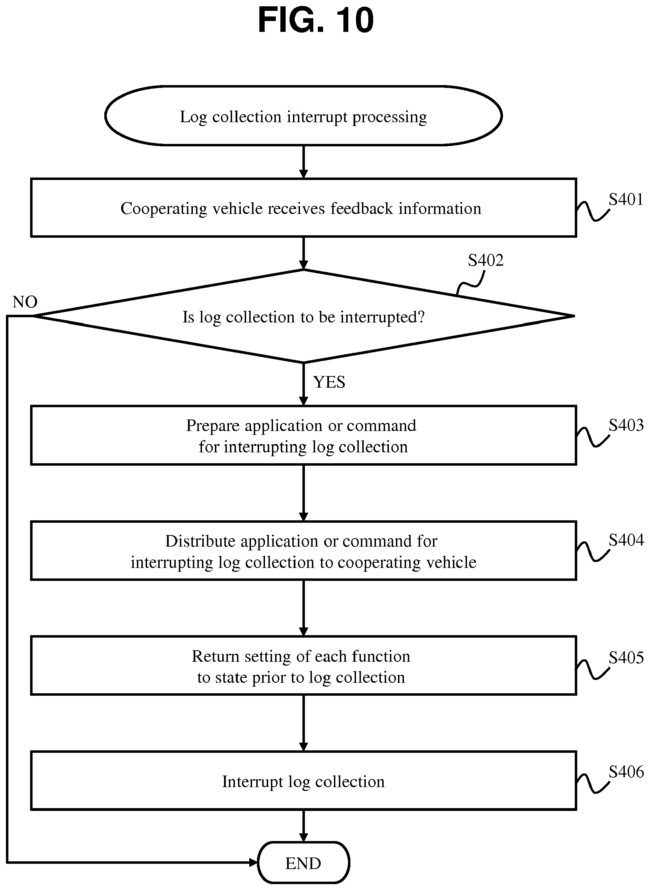

FIG. 10 is a flowchart illustrating a process of interrupting the log collection application 16 after specifying the failure cause.

As the cooperating vehicle 3B receives the failure investigation result and the feedback information from the configuration management system server 100 (S401), the process advances to step S402.

The cooperating vehicle 3B inquires of the driver of the cooperating vehicle 3B whether or not the log collection using the log collection application 16 is interrupted on a user interface (not shown) of a car navigation device (S402).

The driver of the cooperating vehicle 3B (also be called a "user" of the cooperating vehicle 3B) selects whether or not the log collection continues or stops. The driver may determine whether or not the log collection continues or stops depending on the situation of the cooperating vehicle 3B or the like. If the continuation of the log collection application 16 is selected (S402 : NO), the process is terminated. If the log collection application 16 stops (S402: YES), the process advances to step S403. A fact that the cooperating vehicle 3B selects to stop the log collection application 16 is notified to the configuration management system server 100.

The configuration management system server 100 notified of the fact that the cooperating vehicle 3B determines to stop the log collection prepares an application or command for interrupting the operation of the log collection application 16, and creates a package for distributing the application or command to the cooperating vehicle 3B (S403).

The configuration management system server 100 distributes the package created in step S403 to the cooperating vehicle 3B which desires to interrupt the log collection (S404).

Upon receiving the package from the configuration management system server 100, the cooperating vehicle 3B decompresses and executes the package, so that the log setting is returned to the state prior to the start of the log collection (S405) . The package may be executed after obtaining permission of the driver of the cooperating vehicle 3B.

The cooperating vehicle 3B interrupts the operation of the log collection application 16 by executing the application or command received from the server 100. As a result, the log data transmission from the log collection application 16 to the configuration management system server 100 is interrupted.

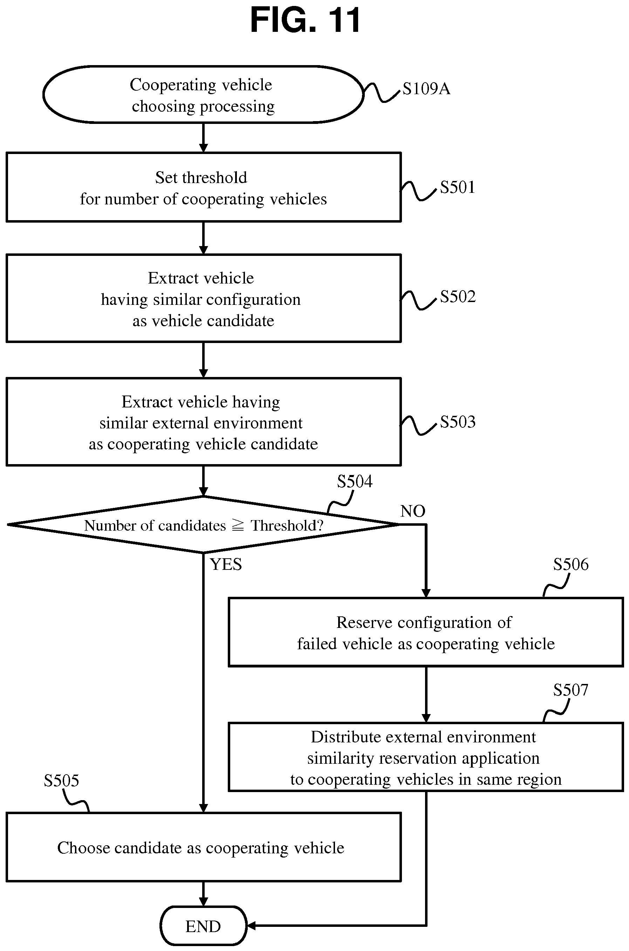

FIG. 11 is a flowchart illustrating a process of choosing a cooperating vehicle when the number of cooperating vehicles is small. The flowchart of FIG. 11 corresponds to a modification of the cooperating vehicle choosing step S109 of FIG. 3.

The cooperating vehicle choosing unit 12 sets a value (threshold) on the number of the cooperating vehicles 3B for specifying the failure cause (S501). The threshold setting may be input by the investigator on the investigation terminal 23, or may be automatically set by the configuration management system server 100 with reference to the previous cases or the like.

As described in conjunction with FIG. 4, the cooperating vehicle choosing unit 12 extracts a vehicle having a similar configuration as that of the failed vehicle 3A as a candidate of the cooperating vehicle 3B (S502) In addition, the cooperating vehicle choosing unit 12 extracts a vehicle having a similar external environment (vehicle having similar use environment history information) as a candidate of the cooperating vehicle 3B from the candidates extracted in step S502 (S503).

The cooperating vehicle choosing unit 12 checks whether or not the number of the chosen cooperating vehicles 3B is equal to or larger than the threshold set in step S501 (S504) . If the number of the cooperating vehicles 3B is equal to or larger than the threshold (S504: YES), the process advances to step S505. If the number of the cooperating vehicles 3B is smaller than the threshold (S504: NO), the process advances to step S506.

In step S505, the cooperating vehicle choosing unit 12 chooses the candidate of the cooperating vehicle having the value equal to or larger than the threshold as the cooperating vehicle 3B. Then, in step S110 of FIG. 3, the log collection application 16 is distributed to the chosen cooperating vehicle 3B.

In step S506, the cooperating vehicle choosing unit 12 records the configuration of the failed vehicle 3A on the cooperating vehicle reservation database 116 of the configuration management system server 100. A "cooperation reservation" refers to a reservation for requesting cooperation as a cooperating vehicle 3B to the vehicle managed by the vehicle information management system 1 in the future. That is, when the configuration of the vehicle newly registered in the configuration management system server 100 is similar to the configuration of the vehicle registered as the cooperation reservation, cooperation is requested.

The cooperating vehicle choosing unit 12 distributes an external environment similarity reservation application to the vehicle existing in the same region as that of the failed vehicle 3A (S507). The external environment similarity reservation application refers to an application distributed to a vehicle having a possibility of similarity of the external environment (use environment history information) of equal to or higher than a predetermined value. If an external environment similar to that of the failed vehicle 3A is detected, the external environment similarity reservation application collects the log and transmits it to the configuration management system server 100.

According to the present embodiment configured as described above, it is possible to choose a cooperating vehicle 3B having a configuration (internal function) and an external environment (use environment history information) similar to those of the failed vehicle 3A.

According to the present invention, it is possible to investigate a cause of failure by collecting information from the cooperating vehicle 3B as well as the failed vehicle 3A. Therefore, using the vehicle information management system 1 according to the present embodiment, it is possible to support investigation and analysis of the cause of failure and improve usability of a user who uses the system 1.

### Embodiment 2

A second embodiment will be described. In the present embodiment, in step S103 described in conjunction with FIG. 3, an external factor that generates the failure is specified by collecting the operation log information of the vehicle and the use environment history information. Hereinafter, differences from the first embodiment will be described with reference to FIGS. 1 to 7.

In step S103 of FIG. 3, the configuration management system server 100 collects the operation log of the vehicle 3A and the use environment history information of the vehicle 3A, specifies a time zone estimated to have a failure, and extracts a user environment and an environmental condition estimated to affect occurrence of failure.

For example, if the vehicle 3A travels on a highway in thunderstorm during a time zone estimated to have a failure, the use environment information includes "weather" and "road situation", and the environmental condition includes "weather is thunderstorm" and "road situation is highway".

Upon collecting the use environment information from the cooperating vehicle 3B, the configuration management system server 100 detects use environment information satisfying the environmental condition extracted from the failed vehicle 3A from the information collected from the cooperating vehicle 3B in step S103. For example, when "weather is rainy" is set in the "environmental condition", the configuration management system server 100 collates the location information of the rainfall region obtained from the weather information distribution system 24 and the location information of the cooperating vehicle 3B, and detects the target cooperating vehicle 3B. When the "environmental condition" is set as "weather is thunderstorm", the target cooperating vehicle 3B is detected by specifying an image where rain and lightning are recorded from the image data captured by the in-vehicle camera of the cooperating vehicle 3B.

In steps S104 and S105 of FIG. 3, the configuration management system server 100 analyzes the operation log of the failed vehicle 3A and chooses a candidate of a failure occurrence location if information has not been collected from the cooperating vehicle 3B.

Upon collecting the use environment information from the cooperating vehicle 3B, the configuration management system server 100 analyzes similarity by collating a result of analyzing the operation log information in the cooperating vehicle 3B in step S104 with a result of analyzing the operation log of the failed vehicle 3A. The configuration management system server 100 specifies an external factor estimated to affect occurrence of failure from the similarity situation of the analysis result of the operation log.

For example, in a case where there is no similarity between the analysis result of the operation log of the cooperating vehicle that travels in the snowy weather and the analysis result of the operation log of the failed vehicle 3A, but the analysis result of the operation log of the cooperating vehicle that travels in a lightning situation under the snowy weather is similar to the analysis result of the operation log of the failed vehicle 3A, the external environment affecting the failure can be specified as "lightning condition under snowy weather".

The configuration management system server 100 chooses a function necessary for the additional log in step S106 and chooses information on the external environment collected from the cooperating vehicle 3B on the basis of the environmental condition extracted in step S103. For example, when "weather: snowy" and "road condition: congestion" are detected from the use environment information of the failed vehicle 3A in step S103, one or more of them can be selected.

In step S107, the configuration management system server 100 sets the log mode and sets the respective environmental condition for each piece of the use environment information chosen in step S106. For example, if "weather" and "road situation" are chosen in step s106, "weather" is selected from "sunny", "rainy", and "snowy", and the "road situation" is selected from "general road" and "highway".

In step S108, the configuration management system server 100 prepares the application 16 for collecting the log from the cooperating vehicle 3B and chooses external information regarding the use environment. For example, the weather state in which the cooperating vehicle 3B travels can be identified by analyzing the location information of the cooperating vehicle 3B and the image data captured using the in-vehicle camera of the cooperating vehicle 3B.

The present embodiment configured as described above has the functional effects similar to those of the first embodiment. In addition, according to the present embodiment, the use environment information (use environment history information) is collected from the cooperating vehicle 3B and is compared with the use environment history information of the failed vehicle 3A. As a result, it is possible to specify an external factor estimated to affect occurrence of failure.

### Embodiment 3

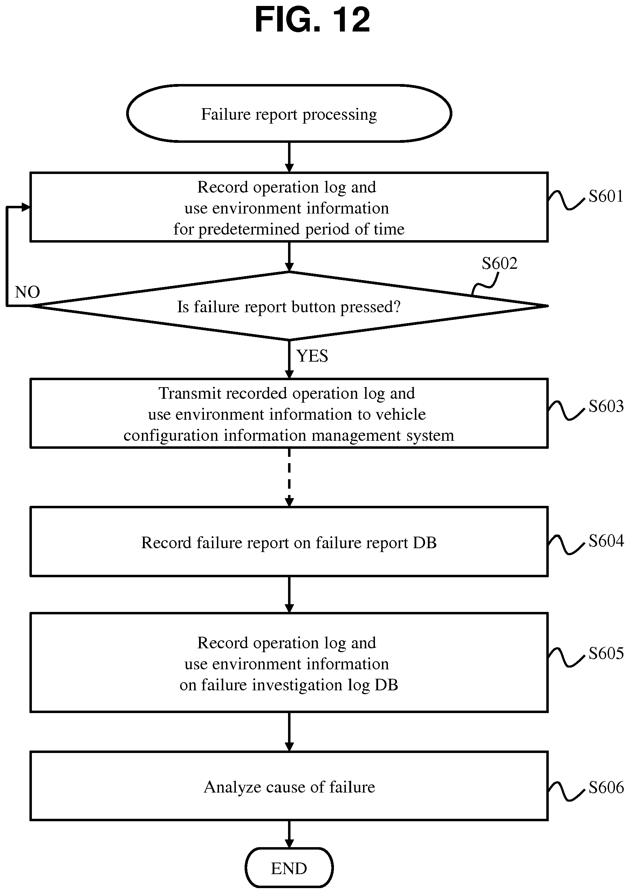

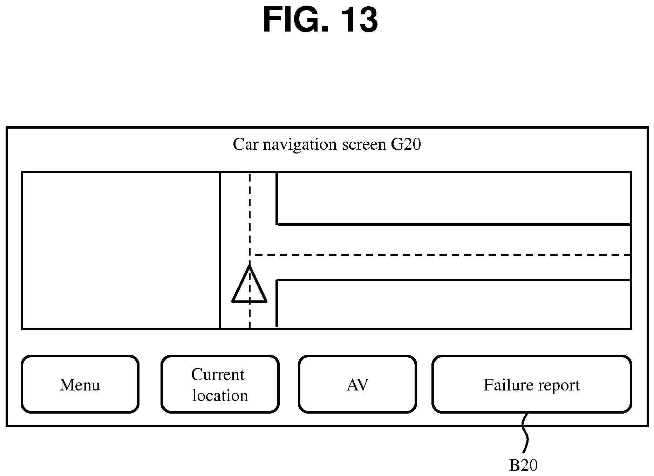

A third embodiment will be described with reference to FIGS. 12 and 13. According to the present embodiment, when the driver of the vehicle 3A feels a failure of the vehicle 3A, the failure can be directly reported to the configuration management system server 100. That is, the driver can report the failure of the vehicle 3A to the vehicle information management system 1 without bring the vehicle 3A to the vendor.

FIG. 12 is a flowchart illustrating the failure report process. Steps S601 to S603 of the computer program indicated in FIG. 12 are embedded in the gateway 300 of the vehicle 3A, the car navigation system, or any one of the ECUs 320.

The vehicle 3A records the operation log and the use environment information for a certain period of time in a normal state (S601) . The storage periods of the operation log and the use environment information are not limited. If a failure has not been detected by a driver from a vehicle, the vehicle is to be referred to as a "vehicle 3". However, it is here referred to as a "vehicle 3A".

When the driver feels a failure during operation of the vehicle 3A or the like, the driver can immediately report the failure to the vehicle information management system 1 without bring the vehicle 3A to the vendor.

As illustrated in the car navigation screen G20 of FIG. 13, for example, a button B20 for reporting the failure is disposed in the car navigation system of the vehicle 3A. When the driver presses the button B20 (S602: YES), a fact that a failure occurs is reported from the vehicle 3A to the configuration management system server 100.

That is, the vehicle 3A monitors whether or not the driver operates the failure report button B20 (S602). If it is detected that the button B20 is pressed (S602: YES), the vehicle 3A transmits, to the configuration management system server 100, the operation log and the use environment information of the vehicle 3A within a period from a predetermined time before the button B20 is pressed to the moment at which the button B20 is pressed (S603).

Steps S604 to S606 described below are executed by the configuration management system server 100. Upon receiving the operation log and the use environment information from the vehicle 3A, the configuration management system server 100 creates new failure report information and records it on the failure report database 114 (S604).

The configuration management system server 100 records the operation log received from the vehicle 3A on a failure investigation log information database 113 (S605). The configuration management system server 100 elucidates the cause of failure detected by the driver in the vehicle 3A by analyzing the recorded operation log information and the recorded use environment information (S606). As described above, elucidation (analysis or specification) of the cause of failure may be performed by the investigator with reference to the operation log or the like, or may be performed by the computer program embedded in the configuration management system server 100.

An aspect of the invention is a data carrier having executable code thereon. The code implements, when running, the method as described, or contributes to rendering a system as described.

The present embodiment configured as described above has functional effects similar to those of the first embodiment. In addition, according to the present embodiment, when the driver feels a failure, the failure can be reported to the vehicle information management system 1. Therefore, compared to a case where the failure is reported to the vehicle information management system 1 via the vendor system 20, it is possible to shorten the time necessary for specifying the failure cause and improve usability. The present embodiment may be combined with either the first or second embodiment. The first, second, and third embodiments may also be combined.

Note that the present invention is not limited to the above-described embodiments, and includes various modifications. The above embodiments have been given in detail to describe the present invention in ways easy to understand, and the present invention is not necessarily limited to one provided with all the described configurations. Moreover, a part of a configuration of a certain embodiment can be replaced with a configuration of another embodiment, and a configuration of another embodiment can be added to a configuration of a certain embodiment. Furthermore, another embodiment can be added to/deleted from/replaced with a part of a configuration of the embodiments. Features described in this specification and the claims or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means and/or possibly program instructions of executable code on a data carrier adapted for implementing the method or procedure or method step or procedural step, and vice versa.

## Claims

1. A vehicle information management system configured to choose a second vehicle corresponding to a first vehicle, the vehicle information management system being configured to
select a vehicle having a functional configuration corresponding to that of the first vehicle as a candidate of the second vehicle, and
select, as the second vehicle, a vehicle having a use environment corresponding to that of the first vehicle out of the selected candidates of the second vehicles.

2. The vehicle information management system according to claim 1, wherein
second information corresponding to first information regarding the first vehicle is collected from the second vehicle.

3. The vehicle information management system according to claim 2, wherein
an information collecting function for collecting the second information from the second vehicle is executed by a control device of the second vehicle.

4. The vehicle information management system according to claim 3, wherein
at least a part of the information collecting function is implemented by a computer program distributed to the control device of the second vehicle.

5. The vehicle information management system according to claim 3, wherein
the information collecting function is interrupted in a predetermined case.

6. The vehicle information management system according to claim 3, wherein
information based on an analysis result of the second information is provided to the second vehicle in a predetermined case.

7. The vehicle information management system according to claim 2, wherein
the second information is collected from the second vehicle when the number of vehicles each selected as the second vehicle reaches a predetermined threshold.

8. The vehicle information management system according to claim 6, wherein
the information based on the analysis result of the second information contains a cause of an event indicated by the first information in the first vehicle.

9. The vehicle information management system according to claim 2, wherein
the first information is information representing occurrence of a failure in the first vehicle, and
the second information is information regarding a cause of the failure.

10. The vehicle information management system according to claim 1, wherein
information regarding a functional configuration of the first vehicle and information regarding a functional configuration of the second vehicle are obtained from at least one of a computer system of a vehicle vendor, a computer system of a vehicle supplier, and a computer system of an OEM manufacturer who manufactures a vehicle in the name of the supplier.

11. A vehicle information management method for choosing a second vehicle corresponding to a first vehicle using a computer, the method comprising:
selecting a vehicle having a functional configuration corresponding to that of the first vehicle as a candidate of the second vehicle,
selecting, as the second vehicle, a vehicle having a use environment corresponding to that of the first vehicle from the selected candidates of the second vehicles, and
causing a control device of the second vehicle to execute an information collecting function for collecting second information corresponding to the first information regarding the first vehicle from the second vehicle.

12. A data carrier having executable code thereon, the code implementing, when running, the method of claim 11.
